## Europäisches Patentamt
## European Patent Office
## Office européen des brevets

(19)

(11) Publication number: **0 175 472**
**A1**

(12)

# EUROPEAN PATENT APPLICATION

(21) Application number: **85305722.2**

(22) Date of filing: **13.08.85**

(51) Int. Cl.⁴: **B 23 B 47/24, F 16 D 11/00**

(30) Priority: **16.08.84 US 641381**

(43) Date of publication of application: **26.03.86**
**Bulletin 86/13**

(84) Designated Contracting States: **CH DE FR GB IT LI SE**

(71) Applicant: **Tapmatic Corporation, 1851 Kettering Street, Irvine California 92714 (US)**

(72) Inventor: **Johnson, Allan S., 1400 Nottingham Road, Newport Beach California 92660 (US)**

(74) Representative: **Coxon, Philip et al, Eric Potter & Clarkson 14 Oxford Street, Nottingham NG1 5BP (GB)**

(54) Automatic tapping attachment and drive system therefore.

(57) An automatic tapping attachment and drive system therefore incorporates ball drive interrelating features to allow both simultaneous and independent rotational and axial movement of the parts relative to each other and the work piece in forward and reverse directions. Elements of the tapping attachment are provided with bevelled or chamfered surfaces which allow for minimization of adverse wear and tear on the operating parts of the tapping attachment.

EP 0 175 472 A1

-1-

## DESCRIPTION

This invention relates to automatic tapping attachments and drive systems therefore of the type generally described in U.S. Patent Nos. 3,397,588 issued August 20, 1968; 3,791,756 issued February 12, 1974; 3,946,844 issued March 30, 1976; 3,999,642 issued December 28, 1976; 3,717,892 issued February 27, 1973; and 4,014,421 issued March 29, 1977, all to Allan S. Johnson, inventor hereof. These patents are characteristic of the prior art and the general operating features and advantages thereof are hereby incorporated by reference herein as though set forth fully.

It is an object of the present invention to provide an improved automatic tapping attachment and drive system.

According to the present invention we provide an automatic tapping attachment which may be associated with a source of rotational drive to impart rotational drive to a tap engageable with a work piece to perform work thereon, comprising:

an elongated generally cylindrical housing;

a spindle operably associated with the housing and associatable with a tap to receive the rotational drive and transmit the same to the tap; and

drive system means for communicating the spindle with the rotational drive and for minimizing adverse wear on the tapping attachment and frictional losses associated with operation of the same.

The drive system may incorporate ball drive interrelating features to allow rotational and axial movement of the parts relative to each other and the work piece in forward and reverse directions. Various parts of the attachment may be provided with bevelled or chamfered edges which allow for minimization of adverse wear and tear on the operating parts of the tapping attachment which might be occasioned by the use of the ball drive features. Incorporation of the ball drive feature permits the instant tapping attachment to operate smoothly, efficiently and with a minimization of frictional losses.

Better understanding of the present invention may be had from the consideration of the following detailed description taken in conjunction with the accompanying drawings in which:

Figures 1 and 2 are sectional elevational views of the tapping attachment according to the present invention in different operating positions;

Figure 3 is an elevational view of a portion of a driver, bearing and ball used in the present invention;

Figure 4 is a top plan sectional view taken generally along the lines 4-4 of Figure 1; and

Figure 5 is an elevational sectional view of the area of Figure 4.

Referring now to the drawings, the subject invention is an automatic tapping attachment generally designated by the reference numeral 10, of the type used with right handed taps. The tapping attachment 10 includes a housing 12, a spindle 14 and a suitable chuck 16 to permit engagement with a right handed tap (not shown in the drawings). The upper end of the housing 12 is suitably adapted to be engageable with a generally conventional machine tool with which the attachment in according to the present invention may be used. The machine tool is of a type preferably which causes rotational movement and selectional limited axial movement of the housing.

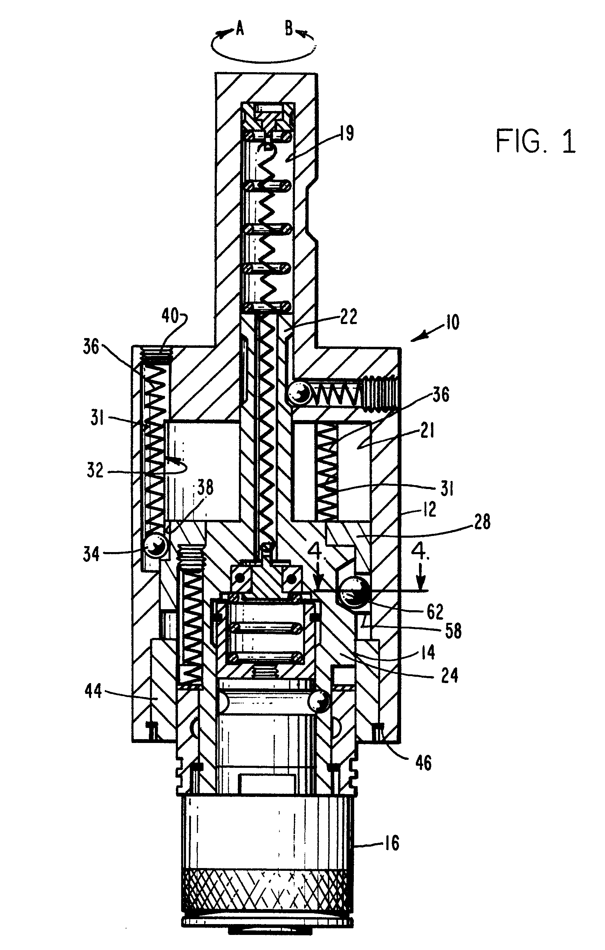

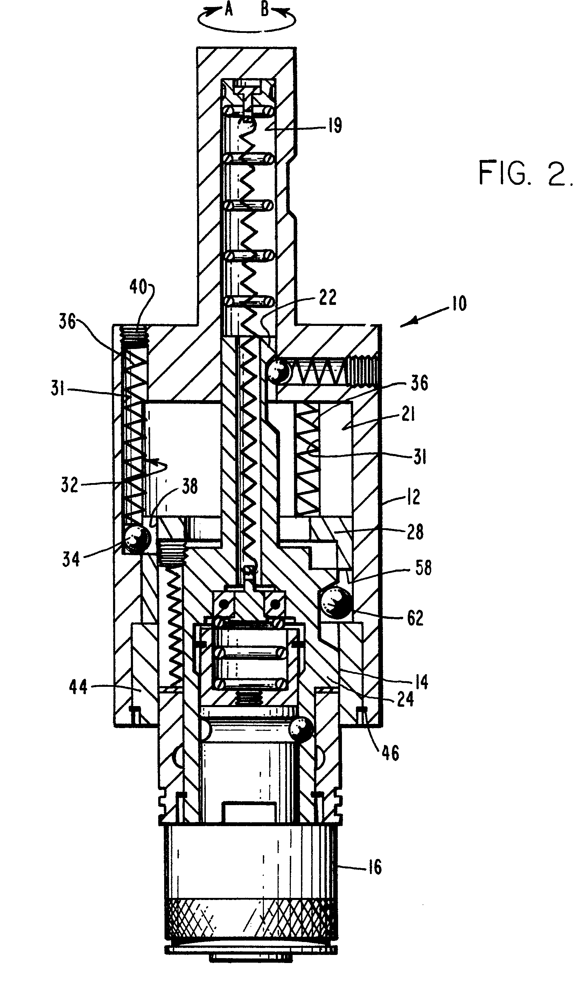

The housing 12 is provided with two generally cylindrical cavities 19 and 21 whose axes are aligned. Cavity 19 is designed to receive a stem 22 of the spindle 14 as shown in Figures 1 and 2. The larger bottom portion 24 of the spindle is received generally within cavity 21 of the housing 12.

The spindle 14 is situated within the housing 12 so that limited axial movement thereof within the housing 12 is permitted. Similarly simultaneous and independent relative rotation of the housing 12 and spindle 14 can also occur. As will be more fully described herein below, the housing and spindle are so interrelated through other additional parts (to be specified) so that generally clockwise rotation (in the direction of arrow A) of the housing will cause rotation of the tap into a work piece and free axial float of the spindle can occur relative to the housing as the tapping operation proceeds.

Drive disengagement of the spindle 14 from the housing 12 occurs when the tap has achieved sufficient depth in the work piece. Rotation of the housing 12 may continue independently of the nonrotating spindle. Rotation of the housing 12 in a counterclockwise rotation will cause automatic retraction of the tap from the work piece and relative axial movement of the spindle 14 into the housing 12.

The tapping attachment 10 according to the present invention also includes a driver 28 which fits into the cavity 21 of the housing 12 as shown. A central opening designated by the reference numeral 29 (as best seen in Figure 2) is provided in the driver so that the driver 28 may be aligned coaxially with the spindle 14 so as to receive the stem 22 thereof as shown.

Housing 12 is provided with axial bores 31, approximately $120^{\circ}$ apart and bores 31 open into the large inner cavity 21 as shown generally at 32. Cavities 31 in the housing 12 are designed to receive balls 34. The balls 34 are biased by springs 36 partially into engagement with partial cavities 38 on the outer surface of the driver 28.

Thus, it should be seen that rotation of the housing 12 causes transmission of torque and therefore rotation of driver 28 by virtue of the interconnecting between balls 34, housing 12 and driver 28. It will be readily understood that the partial cavities 38, spaced about the outer surface of the driver 28 at approximately 120°, take the form of generally axially disposed partial cylindrical cavities. The springs 36 are maintained in the axial bores 31 through the use of suitable threaded plugs 40. A suitable bearing 44 is provided in cavity 21 to journal spindle 14 for rotational and axial movement. The journal bearing 44 is retained within cavity 21 by use of snap ring 46.

The driver 28 is provided with axially disposed slots generally designated by the reference numeral 58, and best understood by reference to Figures 3 - 5. The slots 58 in driver 28 are designed to cooperate with matching slots generally designated by the reference numeral 60 in the bottom portion 24 of spindle 14 to transmit torque to the spindle through cooperation with balls 62 and permit limited axial movement of spindle 14 relative to the driver 28 in a fashion which facilitates minimal frictional losses because of the use of the ball drive feature.

Reference to Figure 4 illustrates that the slots 58 in the driver are actually cut so that bevelled axially oriented faces or surfaces 66 and 66' are displayed. It is easily seen in Figure 4 that the axially oriented face 66 (and likewise 66') varies from a hypothetical line which runs as the radius of the tapping attachment by approximately 28°. Thus, the inner edges of surfaces 66 and 66' are spaced wider apart than the outer edges of the surfaces 66 and 66'. Surfaces 66 and 66' are parallelly aligned with matching opposing respective axially oriented faces 70 and 70' in the spindle 14.

The driver 28 has a bottom surface 78 best understood by reference to Figures 3 - 5. The bottom surface 78 is bevelled as shown in Figure 5 so that the bevelled portion thereof is inclined from a plane normal to the axis of the driver by approximately 23°. Thus, the outer edges of the bevelled portions are further from the plane normal to the axis of the driver than the inner edges. The bottom bevelled surface 78 of the driver 28 also is ramped as can be seen in Figure 3. The driver 28 is machined so that face 66 is substantially shorter than face 66', thus the ramped bottom face or surface 78 is generated. The lowest point of the driver 28 (at the point of intersection of bottom surface 78 with axially oriented face 66') comes to bear upon the upper surface of the bearing 44. Bearing 44 thus acts as a thrust bearing for the driver 28.

Referring now to Figures 1, 2 and 3 the operation of the tapping attachment drive system therefore according to the present invention is best understood. Figure 1 shows the tapping attachment according to the present invention in a fully retracted position, i.e. before use to do work upon a work piece. Rotation of the housing in the direction generally indicated by the arrow A causes rotation of the spindle 14 and progressive movement of the tap into the work piece. This movement of the tap into the work piece causes downward axial movement of the spindle 14 relative to the housing and driver 12 and 14 respectively.

The driver, however, stays relatively fixed with respect to the housing during this performance of work on the work piece. Movement of the spindle 14 downwardly causes the ball 62 to move from the position shown in Figure 3 in solid line to that eventually shown by phantom lines. When the ball 62 reaches the point illustrated in Figure 2 and Figure 3 in phantom, rotational movement of the housing will occur but rotational movement of the spindle 14 will cease because the ball is no longer in engagement with the driver as can be readily understood. Instead the ball being in the lower position will engage the ramped bevelled bottom surface 78 of the drive and cause reciprocating action thereof in the direction indicated by arrow C-D as the driver 28 continues to rotate with the housing. The ball 62 will then effectively track a path from face 66 downwardly along the dotted lines indicated at 84, as the work progresses until the intersection of face 66 and bottom bevelled surface 78 occurs at which point in time the ball will track the path indicated by dotted line 86. It should be understood that when the ball is tracking the line 86, no further work will be done upon the work piece by the tap despite rotation of the housing and the driver in the direction indicated by arrow A. The reciprocating action of the driver 28 will occur because of the fact that the ball 62 is in the lower position and resting upon the upper surface of the bearing 44.

Use of the bevelled faces 66, 66', 70 and 70' in conjunction with the bottom bevelled surface of the driver 78 allows for smooth transition of the ball 62 from the axially disposed faces to the bevelled and ramped bottom surface of the driver 28 with a minimal amount of adverse wear and tear on the operating parts of the tapping attachment according to the present invention. More particularly skidding of the ball 62 along the transition edges is prevented and the force generated by rotation of the housing is transmitted from part to part generally at the centre point thereof which it shall be understood is the strongest point.

With ball 62 in the position shown in phantom in Figure 3 and the tapping attachment being in the configuration shown in Figure 2, no further work can be done upon the work piece. At this point in time, it is desirable to back the tap out of the work piece. Thus, rotation in the direction of arrow A is ceased and the rotation in the direction of arrow B is begun.

Referring now more to Figure 3 counterclockwise rotation of the housing 12 and driver 28 brings the ball 62 into contact with the bottom of dotted line 92 on face 66'. Thus, it should be understood that this causes transmission of force through ball 62 into face 70' of the spindle 14 to cause counterclockwise rotation of the spindle and thus the tap progresses out of the work piece. Axial movement of the spindle into the housing 12 occurs until the configuration of the tapping attachment shown in Figure 1 is achieved. It should be understood that as this occurs the ball 62 tracks the path 92 on face 66' as shown in Figure 3 with the same minimal friction losses achieved via the use of ball interconnecting elements. Again the presence of the bevelled surfaces permits transmission of force from the driver to the spindle by the application of such forces at substantially the mid or strongest points of the operating elements.

## CLAIMS

1. An automatic tapping attachment which may be associated with a source of rotational drive to impart rotational drive to a tap engageable with a work piece to perform work thereon, comprising:

an elongated generally cylindrical housing;

a spindle operably associated with the housing and associatable with a tap to receive the rotational drive and transmit the same to the tap; and

drive system means for communicating the spindle with the rotational drive and for minimizing adverse wear on the tapping attachment and frictional losses associated with operation of the same.

2. A tapping attachment as in Claim 1, said drive means including:

ball drive elements operably associatable with the source of rotational drive and said spindle so that said spindle is revolvable about the axis of the tapping attachment whereby said ball drive elements transmit rotational energy to said spindle; and

said spindle having bevelled surfaces to permit generally frictionless axial movement of said spindle relative to the housing and transmit the rotational drive to the spindle at generally the outer surface of the spindle.

3. A tapping attachment as in Claim 1 or 2, said drive system means including:

a driver within said housing operably associatable with the source of rotational drive, said driver concentrically located within the housing and having axially oriented bevelled surfaces;

balls operably associated with the driver to be engageable with said axially oriented bevelled surfaces of said driver and be driven thereby to revolve the same about and be axially displaceable on the surface of the driver through rotation of the balls; and

axially oriented bevelled surfaces on said spindle operably associated with said balls to be engageable with said balls to drive said spindle.

5. An automatic tapping attachment which may be associated with a source of rotational drive to impart rotational drive to a tap engageable with the work piece to perform work thereon, comprising:

an elongated generally cylindrical rotatable housing;

a spindle mounted within and operably associated with said housing and associatable with the tap to receive the rotational drive and transmit the same to the tap; and

drive system means for communicating the spindle with the rotational drive and for minimizing adverse wear on the tapping attachment and frictional losses associated with operation of the same, said drive system comprising:

a) a driver within said housing operably associated with the source of rotational energy, said driver concentrically located within said housing and having a plurality of circumferentially positioned slots forming a plurality of pairs of axially oriented opposed bevelled faces wherein one face of each pair of opposed faces is longer than its associated opposing face such that the bottom surface of the drive member has bevelled ramped sections for disengaging said spindle from said driver when said spindle moves axially a predetermined distance;

b) balls operably associated with said driver, said balls engageable with said axially oriented bevelled surfaces of said driver to be driven thereby to revolve same with said driver and be axially displaceable along said bevelled surfaces of said driver through rotation of said balls; and

c) axially oriented circumferentially positioned bevelled surfaces on the outer surface of said spindle operably associated with said balls to be engageable with said balls and be driven thereby, said surfaces approximately parallel to the matching opposing respective faces on said driver.

6. An automatic tapping attachment which may be associated with a source of rotational drive to impart direct and reverse rotational drive to a tap engageable with a work piece to perform work thereon, comprising:

an elongated generally cylindrical rotatable housing;

a spindle mounted within an operably associated with said housing and associatable with the tap to receive the rotational drive and transmit the same to the tap; and

drive system means for communicating the spindle with the rotational drive and for minimizing adverse wear on the tapping attachment and frictional losses associated with operation of the same, said drive system comprising:

a) a driver within said housing operably associated with the source of rotational drive, said driver concentrically located within said housing and having a plurality of circumferentially positioned slots each of said plurality of slots forming a pair of axially oriented opposed bevelled faces wherein one face of each pair of opposed faces is longer than its associated opposing face such that the bottom surface of the drive member has bevelled ramped sections for disengaging said spindle from said driver when said spindle moves axially a predetermined distance;

b) balls operably associated with said driver, said balls engageable with said axially oriented bevelled surfaces of said driver to be driven thereby to revolve the same with said driver and be axially displaceable along said bevelled surfaces of said driver through rotation of said balls; and

c) axially oriented circumferentially positioned bevelled surfaces on the outer surface of said spindle operably associated with said balls to be engageable with said balls and be driven thereby, said surfaces approximately parallel to the matching opposing respective faces on said driver.

7. A tapping attachment as in any of Claims 3 to 6, wherein said bevelled axially oriented surfaces on said driver vary by an angle of 28$^{\circ}$ from a hypothetical line running as the radius of the tapping attachment.

8. A tapping attachment as in Claim 7 wherein said bevelled axially oriented surfaces are parallelly aligned with the matching opposing faces on said spindle.

9. A tapping attachment as in any of Claim 4 to 8, wherein said bevelled portion of said driver is axially inclined from a plane normal to the axis of the driver by an angle of 23$^{\circ}$.

0175472

1/3

FIG. 1

FIG. 2.